# EUROPÄISCHE PATENTSCHRIFT

(11) **EP 1 744 473 B1**
(45) Veröffentlichungstag und Bekanntmachung des Hinweises auf die Patenterteilung: **08.08.2012**
(21) Anmeldenummer: 06012810.5
(22) Anmeldetag: 22.06.2006
(51) Int. Cl.: H04W 56/00

(54) **Übertragungssystem mit Zeitmultiplexvielfachzugriff für die Synchronisation von mehreren Basisstationen**
Time division multiple access communications system for synchronization of a plurality of base stations
Système de communication cellulaire à accès multiple par répartition dans le temps pour la synchronisation d'une pluralité de stations de base

(30) Priorität: 13.07.2005 DE 102005032646; 18.02.2006 DE 102006007649
(43) Veröffentlichungstag der Anmeldung: 17.01.2007
(73) Patentinhaber: ABB AG, 68309 Mannheim (DE)
(72) Erfinder: Steigmann, Richard, 67229 Gerolsheim (DE); Vefling, Harald, 3140 Borgheim (NO); Endresen, Jan, 1341 Slependen (NO); Vallestad, Anne E., 1338 Skandika (NO)

(56) Entgegenhaltungen:
- WO-A-00/69102
- WO-A-94/28643
- DE-A1- 10 353 337
- GB-A- 2 309 357

## Beschreibung

Die Erfindung bezieht sich auf ein Kommunikationssystem - betrieben gemäß TDMA (Time Division Multiple Access) - mit mindestens drei Zellen gemäß dem Oberbegriff des Anspruchs 1.

Die Erfindung kann beispielsweise bei einem System mit einer Vielzahl (jedoch genau bekannter) drahtloser Sensoren und/oder Aktoren (Knoten) und einer Basisstation verwendet werden, welches in einer Maschine oder Anlage, beispielsweise Industrieroboter, Herstellungsautomat oder Fertigungsautomat installiert ist. Als Sensoren bzw. Aktoren können Näherungsschalter/Näherungssensoren, Temperaturmesssensoren, Druckmesssensoren, Strommesssensoren oder Spannungsmesssensoren bzw. mikromechanische, piezoelektrische, elektrochemische, magnetostriktive, elektrostatische oder elektromagnetische Aktoren verwendet werden.

Aus der WO 94/28643 A ist ein gemäß TDMA betriebenes Kommunikationssystem mit mindestens zwei Zellen bekannt, wobei jede Zelle eine Basisstation mit einem FunkSender/Empfänger aufweist und hierüber mit einer festgelegten und genau bekannten Anzahl von Mobilstationen kommuniziert. Die Basisstationen der unterschiedlichen Zellen tauschen untereinander Synchronisationssignale aus.

Aus der DE 103 53 337 A1 ist ein Verfahren zum Betrieb eines Systems mit mehreren Knoten und einer Basisstation gemäß TDMA bekannt, wobei die Basisstation zweckmäßig an ein Automatisierungsgerät angeschlossen ist.

Aus der WO 00/69102 A ist ein Kommunikationssystem mit einer Vielzahl von Zellen bekannt, welche jeweils eine Basisstation aufweisen, welche jeweils lokale Taktsignale verwenden, wobei zur Synchronisation dieser lokalen Taktsignale untereinander ein Master-Taktsignal von einem GPS-System (Global Positioning System) oder einer anderen genauen Frequenzquelle bezogen wird.

Aus der GB 2 309 357 A ist eine zur Kommunikation mit einem Mobiltelefon dienende Basisstation bekannt, wobei Frequency Hopping gemäß einer zwischen Mobiltelefon und Basisstation vereinbarten Frequenzfolge eingesetzt wird.

In der DE 199 26 799 A1 wird ein System für eine eine Vielzahl von drahtlosen Näherungssensoren aufweisende Maschine, insbesondere Fertigungsautomat, vorgeschlagen, wobei
- jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Näherungssensoren mit elektrischer Energie vorgesehen ist,
- und wobei jeder Näherungssensor mit einer Sendeeinrichtung ausgestattet ist, welche interessierende Sensor-Informationen beinhaltende Funksignale an eine zentrale, mit einem Prozessrechner der Maschine verbundene Basisstation abgibt.

Bei diesem drahtlosen System entfällt im Vergleich zu konventionellen Lösungen mit Draht/Kabelanschluss zur elektrischen Energieversorgung und zur Kommunikation der durch Planung, Material, Installation, Dokumentation und Wartung bedingte relativ hohe Kostenfaktor der Draht/Kabelanschlüsse. Es können keine Ausfälle aufgrund von Kabelbrüchen oder schlechten, beispielsweise korrodierten Kontakten auftreten.

In der DE 199 26 562 A1 werden ein Verfahren und eine Anordnung zur drahtlosen Versorgung einer Vielzahl Aktoren mit elektrischer Energie, ein Aktor und eine Primärwicklung hierzu sowie ein System für eine eine Vielzahl von Aktoren aufweisende Maschine vorgeschlagen, wobei die vorgeschlagene Technologie bezüglich Energieversorgung und Kommunikation gleichartig der vorstehend für die DE 199 26 799 A1 angegebenen Technologie ist.

Für die Funkübertragung wird dabei die TDMA-Technologie (Time Division Multiple Access) eingesetzt, bei der die Informationen von/zu den Aktoren bzw. Sensoren (Knoten) in Form zyklischer TDMA-Datenübertragungsblöcke übermittelt wird, wobei jedem Sensor/Aktor ein bestimmter Zeitschlitz innerhalb eines Datenübertragungsblockes zugeordnet ist.

Der Erfindung liegt die Aufgabe zugrunde, ein zuverlässig und störungsfrei betreibbares Kommunikationssystem - betrieben gemäß TDMA (Time Division Multiple Access) - mit mindestens zwei Zellen anzugeben.

Diese Aufgabe wird erfindungsgemäß gelöst durch ein Kommunikationssystem - betrieben gemäß Time Division Multiple Access ,TDMA, mit mindestens drei Zellen,
a) wobei jede Zelle eine Basisstation mit einem Funk-Sender/Empfänger aufweist und hierüber mit einer festgelegten und genau bekannten maximalen Anzahl von Sensoren und/oder Aktoren kommuniziert,
b) wobei die Basisstationen mit einem gemeinsamen Automatisierungsgerät verbunden sind,
c) wobei die Basisstationen der unterschiedlichen Zellen untereinander Synchronisationssignale austauschen und
d) wobei ein zusätzlicher Takt-Knoten Zeit-Informationssignale von der Basisstation einer Zelle erhält und diese Zeit-Informationssignale kontinuierlich oder in festgelegten Zeitabständen an die weiteren Basisstationen der weiteren Zellen sendet.

Die mit der Erfindung erzielbaren Vorteile bestehen insbesondere darin, dass mangelnde Synchronisation und Interferenzen zwischen den einzelnen Zellen untereinander (bezüglich Frequenz und Zeit) vermieden werden. Dies ist insbesondere bei Verwendung von Frequency Hopping wichtig (die Daten werden dabei nicht über einen einzigen Frequenz-Kanal sondern paketweise über mehrere Frequenzen gesendet, wobei die Abfolge des periodischen Wechselns zwischen mehreren Frequenzbändern autark innerhalb jeder Zelle erfolgt und jeweils der Basisstation und den ihr zugeordneten Knoten bekannt ist). Folglich werden Frequenz-Kollisionen bei Knoten verhindert, welche unterschiedlichen Zellen zugeordnet sind. Folglich reduziert sich die Anzahl nicht empfangender und deshalb erneut (wiederholt) zu sendender Informationen. Folglich reduziert sich auch der insgesamt zur Informationsübertragung erforderliche Energieverbrauch, was bei hinsichtlich der Energieeinspeisung drahtlos versorgter Sensoren/Aktoren von Wichtigkeit ist.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: ein Kommunikationssystem mit zwei Zellen,
- Fig. 2: ein Kommunikationssystem mit drei Zellen,
- Fig. 3, 4: Kommunikationssysteme mit zusätzlichem Takt-Knoten.

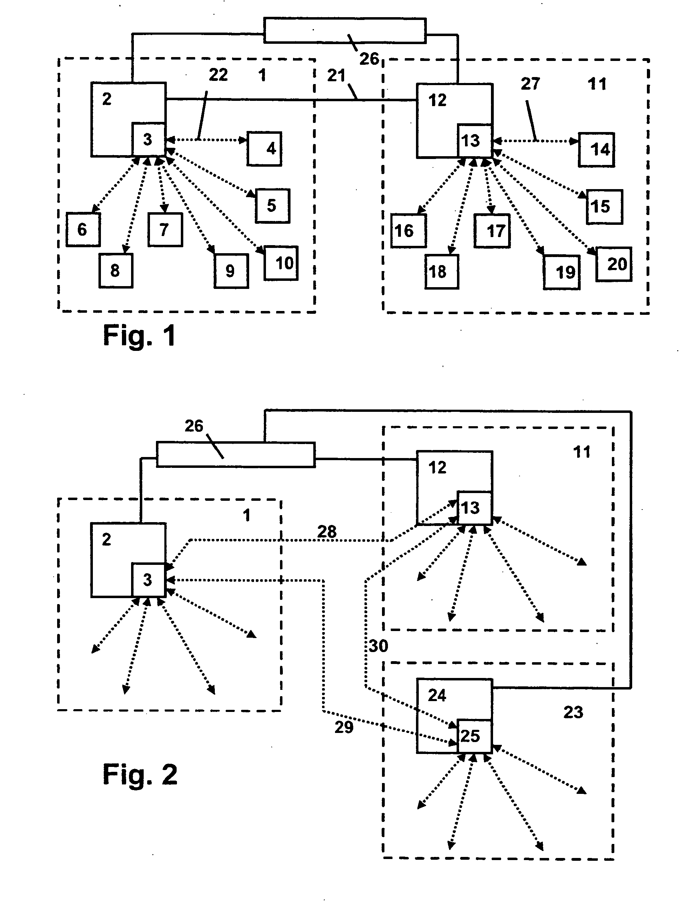

In Fig. 1 ist ein Kommunikationssystem mit zwei Zellen dargestellt. Eine Vielzahl von innerhalb einer Anlage installierter oder an einer Maschine, insbesondere Fertigungsautomat, befestigter Knoten 4 bis 10 - Sensoren und/oder Aktoren - ist einer ersten Zelle 1 zugeordnet, wobei diese erste Zelle 1 eine Basisstation 2 aufweist. Die Basisstation 2 kommuniziert drahtlos mit den Knoten 4 - 10, wobei die drahtlosen Verbindungen mit Ziffer 22 bezeichnet sind. Für die Funkübertragung wird dabei die TDMA-Technologie (Time Division Multiple Access) eingesetzt, bei der die Informationen von/zu den Knoten in Form zyklischer TDMA-Datenübertragungsblöcke übermittelt werden, wobei jedem Sensor/Aktor ein bestimmter Zeitschlitz innerhalb eines Datenübertragungsblockes zugeordnet ist.

In gleicher Art und Weise ist eine Vielzahl von innerhalb einer Anlage installierter oder an einer Maschine, insbesondere Fertigungsautomat befestigter Knoten 14 bis 20 ― Sensoren und/oder Aktoren ― einer zweiten Zelle 11 zugeordnet, wobei diese zweite Zelle 11 eine Basisstation 12 aufweist. Die Basisstation 12 kommuniziert drahtlos mit den Knoten 14 - 20, wobei die drahtlosen Verbindungen mit Ziffer 27 bezeichnet sind. Für die Funkübertragung wird wiederum die TDMA-Technologie eingesetzt.

Es handelt sich dabei um ein geschlossenes Kommunikationssystem mit genau vorgegebener maximaler Anzahl von Knoten pro Zelle.

Bei Ausbildung eines Knotens 4 -10 bzw. 14 - 20 als Sensor weist dieser einen die Sensorumgebung detektierenden Sensorkopf mit nachgeschalteter Signalauswertung auf. Bei Ausbildung eines Knotens 4-10 bzw. 14-20 als Aktor weist dieser eine Aktoreinheit (beispielsweise ein Druckluftventil oder ein Schütz) sowie eine Ansteuereinheit hierfür auf.

Die Knoten 4 - 10 bzw. 14 - 20 weisen jeweils eine Kommunikationseinrichtung auf, welche den erforderlichen Funksender und Funkempfänger enthält, um derart eine drahtlose Kommunikation zwischen der Basisstation und den Knoten (und umgekehrt) zu ermöglichen. Die Kommunikation erfolgt zu jedem Zeitpunkt auf einer einzigen Funkfrequenz von der Basisstation zu den Knoten (downlink) und auf einer hiervon unterschiedlichen Frequenz oder mehreren hiervon unterschiedlichen Frequenzen von den Knoten zur Basisstation (uplink). Diese Frequenzen (sowohl uplink als auch downlink) können sich während des Betriebes ändern. Beispielsweise kann Frequency Hopping verwendet werden und nach jedem TDMA-Datenübertragungsblock (frame) für uplink und/oder downlink eine andere Frequenz verwendet werden. Insbesondere kann für die Knoten der Zellen der gleiche downlink-Kanal verwendet werden, während die Knoten der einzelnen Zellen uplink auf unterschiedlichen Frequenzen senden.

Bei einem Sensor gelangt das aufbereitete Sensorsignal zu einem Modulator / Codierer mit nachgeschaltetem Funksender und Antenne, wo es an die Basisstation gesendet wird. Bei einem Aktor gelangt das von einer Basisstation gesendete Ansteuersignal über eine Antenne, einen Funkempfänger und einen Demodulator / Decodierer zur Ansteuereinheit.

Die Basisstationen 2 bzw. 12 sind an ein Automatisierungsgerät 26 (Speicherprogrammierbare Steuerung) angeschlossen und weisen jeweils einen Funk-Sender/Empfänger 3 bzw. 13 auf, welche Sensorsignale der Sensoren und Meldesignale betreffend den aktuellen Zustand von Aktoren (uplink, von den Knoten zur Basisstation) empfängt, Ansteuersignale zur Aktivierung / Deaktivierung der Aktoren abgibt und Signale zur Einstellung von spezifischen Parametern der Aktoren und Sensoren abgibt (downlink, von der Basisstation zu den Knoten). Die Kommunikationseinrichtung der Basisstationen 2, 12 weisen jeweils eine Antenne auf, an welche ein Funkempfänger und ein Funksender angeschlossen sind. Die Signale des Funkempfängers werden einem Demodulator / Decodierer zugeführt und dem Funksender ist ein Modulator / Codierer vorgeschaltet.

Die Basisstationen 2, 12 der Zellen 1, 11 tauschen über eine drahtgebundene Verbindung 21 (z. B. Ethernet, Feldbus, serielle Verbindung) gegenseitig Informationen aus.

In Fig. 2 ist ein Kommunikationssystem mit drei Zellen dargestellt, wobei die Zellen 1, 11 wie unter Fig. 1 erläutert aufgebaut sind und zusätzlich eine weitere Zelle 23 mit Basisstation 24 und einer Vielzahl (nicht dargestellter) Knoten vorgesehen ist. Die Basisstation 24 ist ebenfalls mit dem Automatisierungsgerät 26 verbunden und weist einen Funk-Sender/Empfänger 25 auf. Im Unterschied zum Ausführungsbeispiel gemäß Fig. 1 tauschen die Basisstationen 2, 12, 24 über drahtlose Verbindungen (FunkVerbindungen) 28, 29, 30 gegenseitig Informationen aus. Diese Funk-Verbindung zwischen Basisstationen muss hierbei nicht dem Kanal entsprechen, welcher der "normalen" Kommunikation zwischen Knoten und Basisstation dient. Auch die Sender und Empfänger für diese Funkverbindungen können unterschiedlich zu den Sendern und Empfängern der "normalen Kommunikation" sein:
- siehe drahtlose Funk-Verbindung 28 zwischen den Funk-Sender/Empfängern 3, 13 der Basisstationen 2, 11,
- siehe drahtlose Funk-Verbindung 29 zwischen den Funk-Sender/Empfängern 3, 25 der Basisstationen 2, 23,
- siehe drahtlose Funk-Verbindung 30 zwischen den Funk-Sender/Empfängern 13, 25 der Basisstationen 11, 23.

Obwohl beispielsweise die (als Knoten eingesetzten) Sensoren ihre Nachrichten in zufälligen Augenblicken generieren, erfolgt eine strikt an den zugeordneten Zeitschlitz bzw. die zugeordneten Zeitschlitze angepasste Übertragung. Um sicherzustellen, dass die in einem Zeitschlitz enthaltene Information auch dem richtigen Aktor zugeordnet wird, bzw. um sicherzustellen, dass ein Sensor die der Basisstation zu übermittelnde Information während des richtigen Zeitschlitzes absendet, enthält jeder Zeitschlitz ein typisches Synchronisationswort zur exakten Synchronisierung zwischen Basisstation einerseits und Knoten andererseits. Der Empfänger der Basisstation kann aus der jedem Zeitschlitz zugeordneten Nummer unverwechselbar den jeweiligen Funksender, d. h. den relevanten Knoten bestimmen.

Die Basisstationen 2, 12, 24 der unterschiedlichen Zellen 1, 11, 23 tauschen über eine drahtgebundene Verbindung 21 oder über drahtlose Verbindungen 28, 29, 30 gegenseitig Informationen aus,
- um die Zellen 1, 11, 23 zueinander zu synchronisieren,
- um einen zeitlichen Drift ("Weglaufen der Frequenzen") der Zellen 1, 11, 23 zueinander zu vermeiden,
- um bei gleichzeitiger Kommunikation in verschiedenen Zellen 1, 11, 23 optimale Frequenzen in den verschiedenen Zellen festlegen zu können und/oder
- um eine zeitversetzte Kommunikation in den verschiedenen Zellen zu bewirken, d. h. während der Zeitspanne einer Kommunikation in der ersten Zelle tritt keine störende Kommunikation in der zweiten Zelle auf.

Insbesondere können Synchronisationssignale und/oder Informationen über für die Kommunikation zwischen Basisstation und Knoten verwendete Funk-Frequenzen und/oder verwendete Zeitfenster/Zeitschlitze ausgetauscht werden. Dabei kann eine Basisstation der "Master" sein und den anderen Basisstationen Synchronisationssignale vorgeben. Es kann aber auch jede Basisstation alle Synchronisationssignale von allen anderen Basisstationen empfangen und sich darauf adaptieren. Alternativ kann auch jede Basisstation Synchronisationssignale von einem zusätzlichen zentralen Gerät empfangen und sich darauf adaptieren.

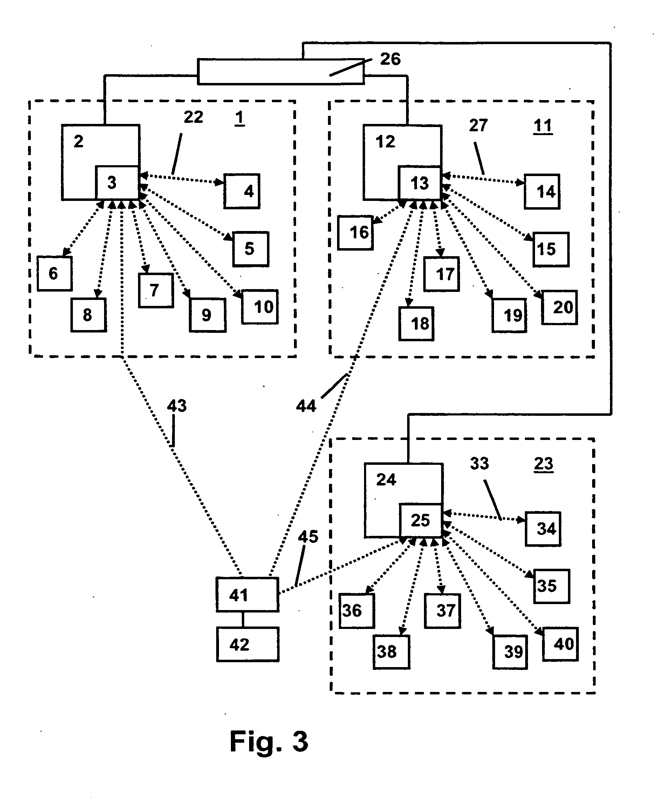

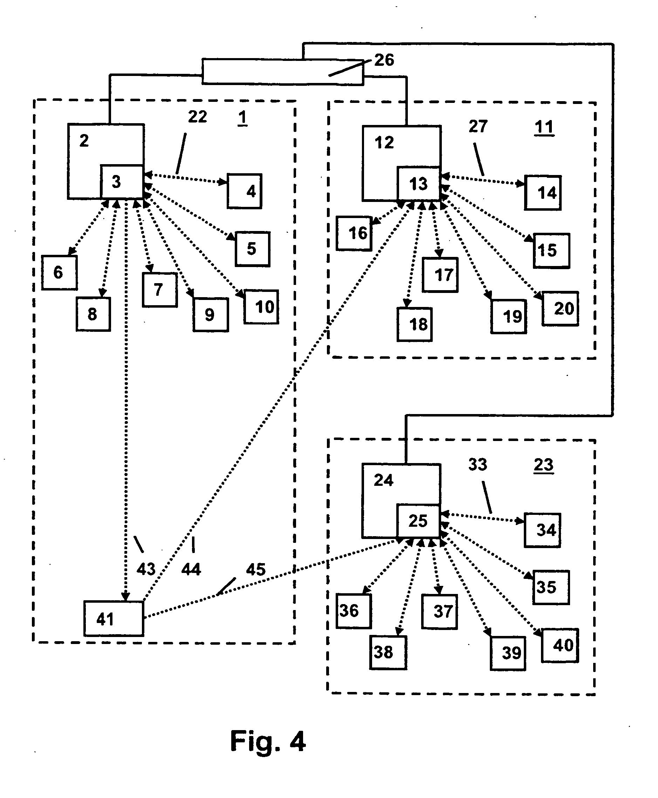

In den Fig. 3 und 4 sind Kommunikationssysteme mit zusätzlichem Takt-Knoten dargstellt, wobei vorgesehen sind:
- eine erste Zelle 1 mit einer Basisstation 2 mit Funk-Sender/Empfänger 3 und Knoten 4 - 10, wobei die drahtlosen Verbindungen zwischen Basisstation und Knoten mit Ziffer 22 bezeichnet sind,
- eine zweite Zelle 11 mit einer Basisstation 12 mit Funk-Sender/Empfänger 13 und Knoten 14 - 20, wobei die drahtlosen Verbindungen zwischen Basisstation und Knoten mit Ziffer 27 bezeichnet sind,
- eine dritte Zelle 23 mit einer Basisstation 24 mit Funk-Sender/Empfänger 25 und Knoten 34 - 40, wobei die drahtlosen Verbindungen zwischen Basisstation und Knoten mit Ziffer 33 bezeichnet sind,
- ein Automatisierungsgerät 26, welches mit den Basisstationen 2, 12, 24 verbunden ist,
- ein zusätzlicher Takt-Knoten 41, welcher einer der Zellen 1, 11, 23 zugeordnet sein kann (aber nicht muss) und über drahtlose Verbindungen 43 bzw. 44 bzw. 45 mit den Funk-Sender/Empfängern 3 bzw. 13 bzw. 25 kommuniziert.

Beim Ausführungsbeispiel gemäß Fig. 3 bezieht der Takt-Knoten 41 Zeit-Informationssignale von einem Ortszeitgeber 42 und sendet diese Zeit-Informationssignale kontinuierlich oder in festgelegten Zeitabständen über die drahtlosen Verbindungen 43, 44, 45 an die Basisstationen der ersten, zweiten und dritten Zelle.

Beim Ausführungsbeispiel gemäß Fig. 4 bezieht der Takt-Knoten 41 Zeit-Informationssignale über die drahtlose Verbindung 43 von der Basisstation 2 der ersten Zelle und sendet diese Zeit-Informationssignale kontinuierlich oder in festgelegten Zeitabständen über die drahtlosen Verbindungen 44, 45 an die Basisstationen 12, 24 der zweiten und dritten Zelle.

Für alle vorstehen erläuteten Ausführungsbeispiele gilt, dass es aufgrund dieses Informationsaustausches zwischen den Zellen einfach möglich und insbesondere bei Einsatz von Frequency Hopping auch von großer Wichtigkeit ist, Interferenzen bezüglich Frequenz und Zeit zwischen den Zellen zu vermeiden. Es wird verhindert, dass die voneinander unabhängigen Frequency-Hopping-Zyklen (Frequenzfolgen) der einzelnen Zellen sich gegeneinander verschieben (Drift). Es wird vielmehr sichergestellt, dass die vorgegebenen konstanten Zeitdifferenzen zwischen den voneinander unabhängigen Frequency-Hopping-Zyklen (Frequenzfolgen) der einzelnen Zellen aufrecht erhalten bleiben, so dass Frequenz-Kollisionen benachbarten, jedoch unterschiedlichen Zellen zugeordneter Knoten verhindert werden.

Wenn vorstehend von Funk-Sender/Empfängern die Rede ist, sind damit sowohl Geräte umfasst, welche getrennte Sender und Empfänger aufweisen, als auch Geräte mit kombinierten Sendern/Empfängern.

Selbstverständlich ist es bei den Ausführungsbeispielen gemäß den Fig. 3 und 4 alternativ möglich, die Kommunikation zwischen dem zusätzlichen Takt-Knoten 41 und den Basisstationen 2, 12, 24 nicht über die drahtlosen Verbindungen 43, 44, 45, sondern über drahtgebundene Verbindungen (beispielsweise Ethernet, Feldbus, serielle Verbindung) zu realisieren.

Bezugszeichenliste:
- 1: erste Zelle
- 2: Basisstation
- 3: Funk-Sender/Empfänger
- 4: Knoten
- 5: Knoten
- 6: Knoten
- 7: Knoten
- 8: Knoten
- 9: Knoten
- 10: Knoten
- 11: zweite Zelle
- 12: Basisstation
- 13: Funk-Sender/Empfänger
- 14: Knoten
- 15: Knoten
- 16: Knoten
- 17: Knoten
- 18: Knoten
- 19: Knoten
- 20: Knoten
- 21: Verbindung (drahtgebunden)
- 22: drahtlose Verbindung
- 23: dritte Zelle
- 24: Basisstation
- 25: Funk-Sender/Empfänger
- 26: Automatisierungsgerät
- 27: drahtlose Verbindung
- 28: drahtlose Verbindung
- 29: drahtlose Verbindung
- 30: drahtlose Verbindung
- 31: ―
- 32: ―
- 33: drahtlose Verbindung
- 34: Knoten
- 35: Knoten
- 36: Knoten
- 37: Knoten
- 38: Knoten
- 39: Knoten
- 40: Knoten
- 41: Takt-Knoten
- 42: Ortszeitgeber
- 43: drahtlose Verbindung
- 44: drahtlose Verbindung
- 45: drahtlose Verbindung

## Patentansprüche

1. Kommunikationssystem - betrieben gemäß Time Division Multiple Access ,TDMA,- mit mindestens drei Zellen,
a) wobei jede Zelle (1, 11, 23) eine Basisstation (2, 12, 24) mit einem Funk-Sender/Empfänger (3, 13, 25) aufweist und hierüber mit einer festgelegten und genau bekannten maximalen Anzahl von Sensoren und/oder Aktoren (4-10, 14-20, 34-40) kommuniziert,
b) wobei die Basisstationen (2, 12, 24) mit einem gemeinsamen Automatisierungsgerät (26) verbunden sind,
c) wobei die Basisstationen (2, 12, 24) der unterschiedlichen Zellen (1, 11, 23) untereinander Synchronisationssignale austauschen und
d) wobei ein zusätzlicher Takt-Knoten (41) Zeit-Informationssignale von der Basisstation (2) einer Zelle (1) erhält und diese Zeit-Informationssignale kontinuierlich oder in festgelegten Zeitabständen an die weiteren Basisstationen (12, 24) der weiteren Zellen (11, 23) sendet.

2. Kommunikationssystem nach Anspruch 1, **dadurch gekennzeichnet, dass** Informationen über für die Kommunikation zwischen Basisstation (2, 12, 24) und Sensoren und/oder Aktoren (4-10, 14-20, 34-40) verwendete Funk-Frequenzen und/oder verwendete Zeitfenster/Zeitschlitze ausgetauscht werden.

3. Kommunikationssystem nach Anspruch 1 oder 2, **dadurch gekennzeichnet, dass** zum Informationsaustausch eine drahtgebundene Verbindung (21) dienst.

4. Kommunikationssystem nach einem der vorstehenden Ansprüche,
**dadurch gekennzeichnet, dass** zum Informationsaustausch eine drahtlose Verbindung (28, 29, 30, 43, 44, 45) dient.

5. Kommunikationssystem nach Anspruch 1, **dadurch gekennzeichnet, dass** der zusätzliche Takt-Knoten (41) einer der Zellen (1, 11, 23) zugeordnet ist.

6. Kommunikationssystem nach einem der vorstehenden Ansprüche, **dadurch gekennzeichnet, dass** die Zellen (1, 11, 23) mit voneinander unabhängigen Frequency-Hopping-Zyklen betrieben werden.

## Claims

1. A communications system, operated according to time division multiple access (TDMA), comprising at least three cells,
a) with each cell (1, 11, 23) having a base station (2, 12, 24) with a radio transmitter/receiver (3, 13, 25) and communicating via said radio transmitter/receiver with a fixed and precisely known maximum number of sensors and/or actuators (4-10, 14 - 20, 34 - 40);
b) with the base stations (2, 12, 24) being connected with a common automation device (26);
c) with the base stations (2, 12, 24) of the different cells (1, 11, 23) exchanging synchronization signals among each other, and
d) with an additional clock node (41) receiving time information signals from the base station (2) of a cell (1) and transmitting said time information signals continuously or in fixed time intervals to the further base stations (12, 24) of the further cells (11, 23).

2. A communications system according to claim 1, **characterized in that** information is exchanged via radio frequencies and/or time windows/time slots used for the communication between base stations (2, 12, 24) and sensors and/or actuators (4-10, 14-20, 34 - 40).

3. A communications system according to claim 1 or 2, **characterized in that** a wire-bound connection (21) is used for the exchange of information.

4. A communications system according to one of the preceding claims, **characterized in that** a wireless connection (28, 29, 30, 43, 44, 45) is used for the exchange of information.

5. A communications system according to claim 1, **characterized in that** the additional clock node (41) is associated with one of the cells (1, 11, 23).

6. A communications system according to one of the preceding claims, **characterized in that** the cells (1, 11, 23) are operated with mutually independent frequency hopping cycles.

## Revendications

1. Système de communication exploité en mode d'accès multiple par répartition dans le temps (AMRT) avec au moins trois cellules,
a) dans lequel chaque cellule (1, 11, 23) possède une station de base (2, 12, 24) avec un émetteur-récepteur radio (3, 13, 25) et communique via celui-ci avec un nombre maximal défini et exactement connu de capteurs et/ou d'actionneurs (4-10, 14-20, 34-40),
b) dans lequel les stations de base (2, 12, 24) sont reliées à un appareil d'automatisation (26) commun ;
c) dans lequel les stations de base (2, 12, 24) des différentes cellules (1, 11, 23) échangent entre elles des signaux d'automatisation et
d) dans lequel un noeud de synchronisation (41) supplémentaire reçoit des signaux d'informations temporelles de la station de base (2) d'une cellule (1) et envoie ces signaux d'informations temporelles aux autres stations de base (12, 24) des autres cellules (11, 23) en continu ou à des intervalles de temps définis.

2. Système de communication selon la revendication 1, **caractérisé en ce que** des informations sur la communication sont échangées à des fréquences radio et/ou dans des fenêtres/créneaux de temps utilisés pour la communication entre la station de base (2, 12, 24) et les capteurs et/ou les actionneurs (4-10, 14-20, 34-40).

3. Système de communication selon la revendication 1 ou 2, **caractérisé en ce qu'**une connexion filaire (21) sert à l'échange des informations.

4. Système de communication selon l'une des revendications précédentes, **caractérisé en ce qu'**une communication sans fil (28, 29, 30, 43, 44, 45) sert à l'échange des informations.

5. Système de communication selon la revendication 1, **caractérisé en ce que** le noeud de synchronisation supplémentaire (41) est associé à l'une des cellules (1, 11, 23).

6. Système de communication selon l'une des revendications précédentes, **caractérisé en ce que** les cellules (1, 11, 23) sont exploitées avec des cycles de saut de fréquence indépendants les uns des autres.
